# EUROPÄISCHE PATENTSCHRIFT

(11) **EP 1 480 918 B1**
(45) Veröffentlichungstag und Bekanntmachung des Hinweises auf die Patenterteilung: **13.07.2005**
(21) Anmeldenummer: 03709697.1
(22) Anmeldetag: 29.01.2003
(51) Int. Cl.: C03C 3/095, H01K 1/28, H01J 17/00, H01J 61/00

(54) **ERDALKALIALUMINOSILICATGLAS UND VERWENDUNG**
ALKALINE-EARTH ALUMINOSILICATE GLASS AND USE THEREOF
VERRE ALUMINOSILICATE ALCALINO-TERREUX ET SON UTILISATION

(30) Priorität: 01.02.2002 DE 10204150
(43) Veröffentlichungstag der Anmeldung: 01.12.2004
(73) Patentinhaber: Schott AG, 55122 Mainz (DE)
(72) Erfinder: FECHNER, Jörg, Hinrich, 55118 Mainz (DE); BRIX, Peter, 55116 Mainz (DE); OTT, Franz, 95666 Mitterteich (DE)
(86) Internationale Anmeldenummer: PCT/EP2003/000883
(87) Internationale Veröffentlichungsnummer: WO 2003/064339

(56) Entgegenhaltungen:
- WO-A-01/85632
- DE-A- 10 006 305
- DE-A- 19 851 927
- DE-C- 19 747 355
- DE-C- 19 758 481
- US-A- 6 069 100

## Beschreibung

Die Erfindung betrifft ein Erdalkalialuminosilicatglas, das insbesondere als Halogenlampenglas geeignet ist, und seine Verwendung.

An Halogenlampengläser werden bestimmte Anforderungen nicht nur hinsichtlich der Temperaturbelastbarkeit, ausgedrückt durch ihre Transformationstemperatur Tg (gefordert ist für Kolbentemperaturen von ≥ 650 °C Tg ≥ 700 °C), und der Verschmelzbarkeit mit dem Elektroden- und Zuleitungsmaterial, ausgedrückt durch eine ans Material angepasste thermische Dehnung, d.h. einem gleichen oder ähnlichen thermischen Ausdehnungskoeffizienten (gefordert ist bspw. für die Anpassung an Molybdän-Komponenten ein α_{20/300} zwischen 4,3 × 10⁻⁶/K und 4,95 × 10⁻⁶/K), sondern auch hinsichtlich ihres Transmissionsverlaufs gestellt.

So ist im sichtbaren Wellenlängenbereich (VIS) eine möglichst hohe Lichtdurchlässigkeit gefordert, um eine hohe Lichtausbeute der Lampe zu erhalten. Auch im infraroten Bereich (IR) ist eine hohe Transmission erwünscht, da so mehr Wärmestrahlung abgegeben werden kann und die Temperatur innerhalb der Lampe geringer bleibt. So wird die thermische Belastbarkeit der Halogenlampe erhöht. Im ultravioletten Bereich (UV) soll die Transmission möglichst gering sein, und der Übergang vom undurchlässigen (d.h. Transmissionsgrad < 0,01 bei einer Schichtdicke von 1 mm) UV-Bereich zum durchlässigen VIS-Bereich soll möglichst kurz sein, d.h. die Transmissionskurve soll in diesem Bereich möglichst steil verlaufen. Man spricht hier von der UV-Kante. Sie ist definiert bei einer Transmission von 58 %. Sie soll im Wellenlängenbereich zwischen 280 und 400 mm einstellbar sein.

Für ein Glas als Kolbenmaterial sind die Mindestanforderungen an die Transmission im sichtbaren und für die Bereitstellung einer in ihrer thermischen Belastbarkeit verbesserten Lampe auch im infraroten Bereich, also im Wellenlängenbereich zwischen 500 nm und 1500 nm ein spektraler Transmissionsgrad von wenigstens 0,9 (bei einer Probendicke von 1,0 mm).

Ein Glas muss für die Verwendung als Kolbenglas für Halogenlampenkolben im wesentlichen alkalioxidfrei sein, da Alkaliionen den regenerativen Halogenkreislauf der Lampe stören, wodurch sich Wolfram statt auf der Wendel auf der Glaskolbeninnenseite als schwarzer störender Belag abscheidet.

Ein weiteres Problem sind Aufwachsungen auf der Wolfram-Glühwendel. Sie beeinträchtigen die Lebensdauer der Lampe.

Ein weiteres Problem stellt die Bildung weißer Beläge an der Innenseite von Halogenlampen dar. Es handelt sich hier bei um einen Halogenid-Niederschlag, der durch Reaktion von Halogen aus der Lampenfüllung mit der Glasoberfläche gebildet wird. Solche Beläge vermindern die Lichtausbeute.

Bisherige Gläser für Halogenlampen zeigen verschiedene Nachteile, insbesondere erfüllen sie nicht die erhöhten Anforderungen an die IR-Transmission.

Es ist daher Aufgabe der Erfindung, ein UV-undurchlässiges Glas mit einstellbarer UV-Kante und mit hoher Transmission im sichtbaren und im IR sowie mit einer an das Ausdehnungsverhalten von Molybdän angepassten thermischen Dehnung bereitzustellen, das für die Verwendung als Kolbenmaterial für Halogenlampenkolben geeignet ist.

Es ist insbesondere Aufgabe der Erfindung, ein Glas zu finden, bei dessen Verwendung als Halogenlampenkolbenglas besagte Aufwachsungen auf der Wendel und Niederschläge an der Kolbeninnenseite verringert werden.

Die Aufgaben werden durch ein Erdalkalialuminosilicatglas gemäß dem Hauptanspruch gelöst.

Das Glas besteht aus dem Grundglassystem (in Gew.-% auf Oxidbasis)

| | |
|---|---|
| SiO₂ | > 58 - 62 |
| B₂O₃ | 0 - 5,5 |
| Al₂O₃ | 13,5 - 17,5 |
| MgO | 0-7 |
| CaO | 5,5 - 14 |
| SrO | 0-8 |
| BaO | 6 - 14 |
| ZrO₂ | 0-2 |

Gläser innerhalb dieses oder ähnlicher Grundglassysteme sind bereits aus DE 197 47 355 C1, DE 197 47 354 C1, DE 197 58 481 C1, WO 99/14794, DE 100 06 305 A1 und DE 100 22 769 A1 bekannt.

Erfindungswesentlich sind die beiden Komponenten CeO₂ und TiO₂, die in speziellen Anteilen, und zwar mit 0,001 bis 0,5 Gew.-% CeO₂ und mit 0,01 bis 2 Gew.-% TiO₂, im Glas vorliegen. Durch das gleichzeitige Vorhandensein dieser beiden Komponenten in den genannten Mengen wird die UV-Kante im gewünschten Wellenlängenbereich zwischen 280 nm und 400 nm erhalten und kann dort bevorzugt zwischen 310 nm und 350 nm eingestellt werden, und wird die Absorption im IR-Bereich minimiert. Das gleichzeitige Vorhandensein von CeO₂ und TiO₂ führt zu einer synergistischen UV-Blockung, d.h. dass die die UV-Strahlung blockierende Wirkung die Summe der Einzelwirkungen übersteigt. Durch die Zugabe von CeO₂ in Verbindung mit TiO₂ wird die Solarisationsstabilität des Glases erhöht. CeO₂ hat auch Läutermittelfunktion.

Höhere als die genannten Gehalte an CeO₂ würden die Absorption im sichtbaren Bereich erhöhen, was zu einer Braunfärbung führen würde. Höhere Gehalte an TiO₂ würden die UV-Kante in den längerwelligen, den sichtbaren Bereich verschieben und somit zur Gelbfärbung der Gläser führen.

Vorzugsweise beträgt der Gehalt an CeO₂ 0,001 - 0,2 Gew.-%. Bevorzugt ist ein Gehalt an CeO₂ zwischen 0,01 und 0,2 Gew.-%, besonders bevorzugt zwischen 0,01 und 0,1 Gew.-%, bevorzugt ist ein Gehalt an TiO₂ zwischen 0,01 und 1 Gew.-%, besonders bevorzugt zwischen 0,03 und 0,8 Gew.-%, ganz besonders bevorzugt zwischen 0,1 und 0,8 Gew.-%.

Ein Glas des genannten Zusammensetzungsbereichs muss für die Verwendung als Kolbenglas für Halogenlampenkolben im wesentlichen alkalioxidfrei sein, da Alkaliionen den regenerativen Halogenkreislauf der Lampe stören. Unter im wesentlichen alkalioxidfrei werden hier auch noch durch Verunreinigungen hervorgerufene Alkalioxidgehalte von bis zu 0,1 Gew.-% verstanden.

Das erfindungsgemäße Glas ist auch im wesentlichen, d.h. bis auf unvermeidbare Verunreinigungen, frei von Eisenoxiden. Eisenoxide würden die Transmission im sichtbaren und vor allem im IR-Bereich herabsetzen. Nicht weiter störende und bei üblichen Bedingungen bei der Glasherstellung und bei Verwendung üblicher Rohstoffe unvermeidbare Verunreinigungen an Eisenoxiden können bis zu 0,04 Gew.-% angegeben als Fe₂O₃, betragen.

Überraschenderweise sind die Elemente mit hohen Ordnungszahlen aufweisenden Dotierstoffe CeO₂ und TiO₂ auch im hier vorliegenden alkalifreien Glassystem unproblematisch hinsichtlich des Einschmelzverhaltens des Gemenges und führen nicht zu Glasfehlern.

Das erfindungsgemäße Glas besitzt einen thermischen Ausdehnungskoeffizienten α_{20/300} zwischen 4,3 × 10⁻⁶/K und 4,95 × 10⁻⁶/K und ist damit in seiner thermischen Dehnung gut an Molybdän, dem für Halogenlampenkolben üblichen Glasdurchführungsmaterial angepasst.

Das erfindungsgemäße Glas besitzt eine Transformationstemperatur Tg von wenigstens 780 °C und weist damit eine für Kolbengläser für Halogenlampen geeignete Temperaturbelastbarkeit auf.

Auch der Transmissionsverlauf des Glases, insbesondere der spektrale Transmissionsgrad zwischen λ= 500 nm und λ= 1500 nm von ≥ 0,9 bei einer Probendicke von 1,0 mm, lässt das erfindungsgemäße Glas für die Verwendung als ein verbessertes Kolbenglas für Halogenlampen hervorragend geeignet sein.

In einer bevorzugten Ausführungsform ist das Glas aus dem Zusammensetzungsbereich (in Gew.-% auf Oxidbasis):

| | | |
|---|---|---|
| SiO₂ | 59 - 62 | |
| B₂O₃ | 3 - 5,5 | |
| Al₂O₃ | 13,5 - 15,5 | |
| MgO | 2,5 - 5 | |
| CaO | 8,2 - 10,5 | |
| BaO | 8,5 - 9,5 | |
| ZrO₂ | 0 - 1 | |
| CeO₂ | 0,001 - 0,2 | vorzugsweise 0,01 - 0,1 |
| TiO₂ | 0,01 - 2 | vorzugsweise 0,01 - 1 |

Ein Glas aus diesem Zusammensetzungsbereich ist vor allem als Kolbenglas für Halogenlampen mit Kolbentemperaturen von maximal 650 °C geeignet.

In einer anderen bevorzugten Ausführungsform ist das Glas aus dem Zusammensetzungsbereich (in Gew.-% auf Oxidbasis):

| | | |
|---|---|---|
| SiO₂ | > 58 - 62 | |
| B₂O₃ | 0 - 1 | bevorzugt 0,2 - 0,7 |
| Al₂O₃ | 14 - 17,5 | bevorzugt 15 - 17,5 |
| MgO | 0 - 6 | bevorzugt 0 - < 1 |
| CaO | 5,5 - 14 | |
| SrO | 0-8 | |
| BaO | 6 - 14 | bevorzugt 6 - 10 |
| ZrO₂ | 0 - 1 | bevorzugt 0,05 - 1 |
| CeO₂ | 0,001 - 0,2 | vorzugsweise 0,01 - 0,1 |
| TiO₂ | 0,01 - 2 | vorzugsweise 0,01 - 1 |

Ein Glas aus diesem Zusammensetzungsbereich ist insbesondere als Kolbenglas für Halogenlampen mit Kolbentemperaturen von mehr als 650 °C geeignet.

Anhand von Ausführungsbeispielen sollen die Vorteile des erfindungsgemäßen Glases, insbesondere seine verbesserten Transmissionseigenschaften, verdeutlicht werden.
Zur Herstellung der Beispielgläser und des Vergleichsglases wurden übliche Rohstoffe verwendet.
Bei der Berechnung der Gemengezusammensetzung wurde berücksichtigt, dass auch TiO₂ in manchen Rohstoffen, z.B. in ZrO₂, als Verunreinigung vorhanden ist.
Das gut homogenisierte Gemenge wurde im Labor in einem Tiegel aus Quarzglas bei 1640° C geschmolzen, geläutert und homogenisiert.

Es wurden Gläser der Grundglaszusammensetzung (in Gew.-% auf Oxidbasis) SiO₂ 60,85; Al₂O₃ 16,5; CaO 13,5; B₂O₃ 0,3; ZrO₂ 1,0; BaO 7,85 hergestellt. Weiter enthalten die Gläser:
- Ausführungsbeispiel 1 (A1):
   190 ppm CeO₂, 1100 ppm TiO₂, als Verunreinigung 320 ppm Fe₂O₃
- Ausführungsbeispiel 2 (A2):
   240 ppm CeO₂, 470 ppm TiO₂, als Verunreinigung 260 ppm Fe₂O₃
- Vergleichsbeispiel 1 (V1):
   < 10 ppm CeO₂, 170 ppm TiO₂, 440 ppm Fe₂O₃
- Ausführungsbeispiel 3 (A3)
   580 ppm CeO₂, 150 ppm TiO₂, als Verunreinigung 220 ppm Fe₂O₃
- Ausführungsbeispiel 4 (A4)
   830 ppm CeO₂, 160 ppm TiO₂, als Verunreinigung 240 ppm Fe₂O₃
- Ausführungsbeispiel 5 (A5)
   10 ppm CeO₂, 570 ppm TiO₂, als Verunreinigung 230 ppm Fe₂O₃
- Ausführungsbeispiel 6 (A6)
   10 ppm CeO₂, 850 ppm TiO₂, als Verunreinigung 160 ppm Fe₂O₃
- Ausführungsbeispiel 7 (A7)
   100 ppm CeO₂, 5000 ppm TiO₂, als Verunreinigung 290 ppm Fe₂O₃
- Vergleichsbeispiel 2 (V2)
   kein CeO₂, kein TiO₂, 500 ppm Fe₂O₃
- Vergleichsbeispiel 3 (V3)
   kein CeO₂, kein TiO₂, 290 ppm Fe₂O₃
- Ausführungsbeispiel 8 (A8)
   10 ppm CeO₂, 5000 ppm TiO₂, als Verunreinigung 290 ppm Fe₂O₃
- Vergleichsbeispiel 4 (V4)
   kein CeO₂, kein TiO₂, 290 ppm Fe₂O₃

Der Alkaligehalt beträgt bei allen Gläsern < 300 ppm

Für alle Gläser beträgt Tg 790 °C und α_{20/300} 4,7 x 10⁻⁶/K.

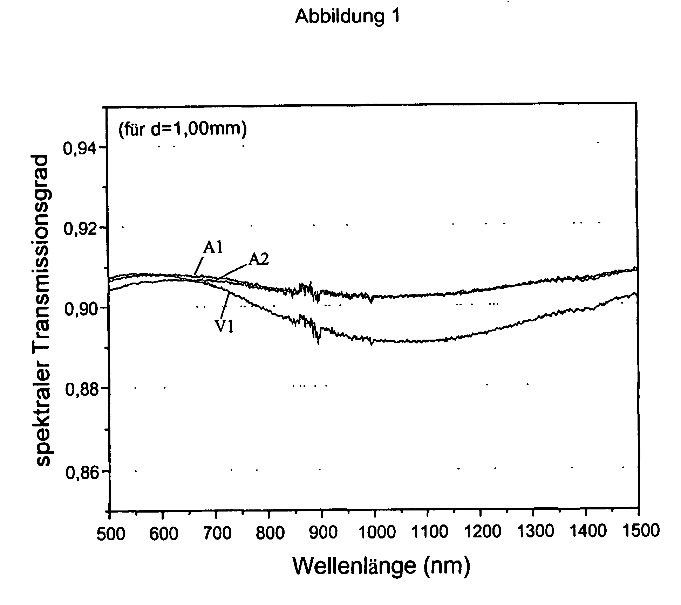

Abbildung 1 zeigt die Transmissionskurven (spektraler Transmissionsgrad versus Wellenlänge) für die Ausführungsbeispiele A1, A2 und das Vergleichsbeispiel V1 (Probendicke jeweils 1,0 mm) im Wellenlängenbereich von 500 nm bis 1500 nm. Die Abbildung 1 dokumentiert die hohe Transmission der erfindungsgemäßen Gläser mit ihrer definierten Dotierung mit TiO₂ und CeO₂, insbesondere im Vergleich mit demselben Grundglas mit der Fe₂O₃-Dotierung des Standes der Technik. Durch die erhöhte IR-Transmission wird bei Verwendung als Lampenkolbenglas mehr Wärme abgeführt, was letztlich eine höhere Temperaturbelastbarkeit einer mit dem erfindungsgemäßen Glas hergestellten Lampe bedeutet.

Für die Ausführungsbeispiele A1 - A6 und das Vergleichsbeispiel V1 wurde τ τ₃₃₀ (1 mm), also der spektrale Transmissionsgrad bei der Wellenlänge λ = 330 nm, gemessen bei einer Probendicke von 1 mm, bestimmt. Er beträgt für A1 58,9 %, für A2 57,6 % und für V1 58,1 %, für A3 42,6 %, für A4 33,5 %, für A5 71,0 % und für A6 69,2 %.

Mit der Definition der UV-Kante bei einer Transmission von 58 % verweist ein τ₃₃₀ < 58 % auf eine UV-Kante > 330 nm und ein τ₃₃₀ > 58 % auf eine UV-Kante < 330 nm. So verdeutlichen diese Ausführungsbeispiele die Variierbarkeit, also die Einstellbarkeit, der UV-Kante im gewünschten Wellenlängenbereich.

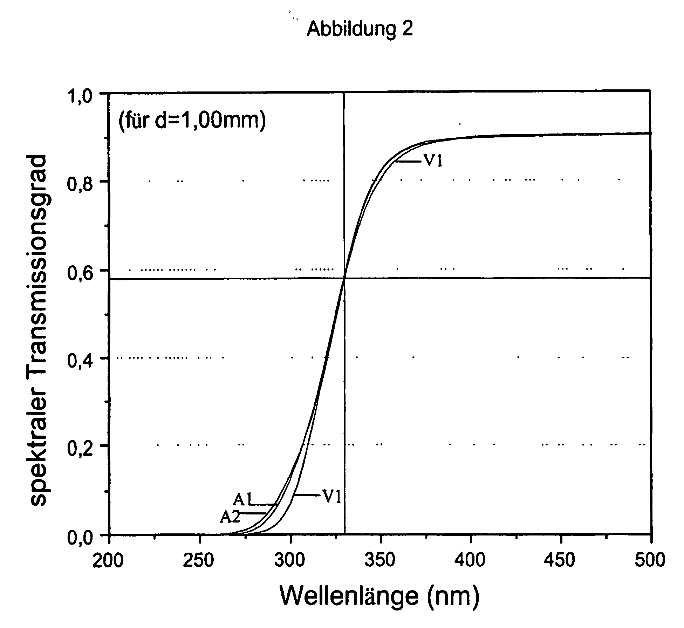

Abbildung 2 zeigt die Transmissionskurven (spektraler Transmissionsgrad versus Wellenlänge für die Ausführungsbeispiele A1, A2 und das Vergleichsbeispiel V1 (Probendicke jeweils 1,0 mm) für den Wellenlängenbereich von 200 nm bis 500 nm.
Bei 330 nm haben diese Gläser einen Transmissionsgrad von ca. 58 %. Dort liegt ihre UV-Kante.
Die Abbildung 2 dokumentiert die hohe UV-Absorption (Transmission < 0,01 %) und die Steilheit der UV-Kante. Die Abbildung 2 dokumentiert, dass bei den erfindungsgemäß dotierten Gläsern dieselbe UV-Kantenlage wie beim Fe₂O₃-dotierten Glas des Standes der Technik einstellbar ist.

Mit dem erfindungsgemäßen Glas mit seiner CeO₂- und TiO₂-Dotierung kann also, wie in dieser Abbildung 2 gezeigt, auf die Fe₂O₃-Dotierung verzichtet werden, so dass der in Abbildung 1 verdeutlichte Vorteil der hohen IR-Transmission ohne Nachteil erzielt wird.

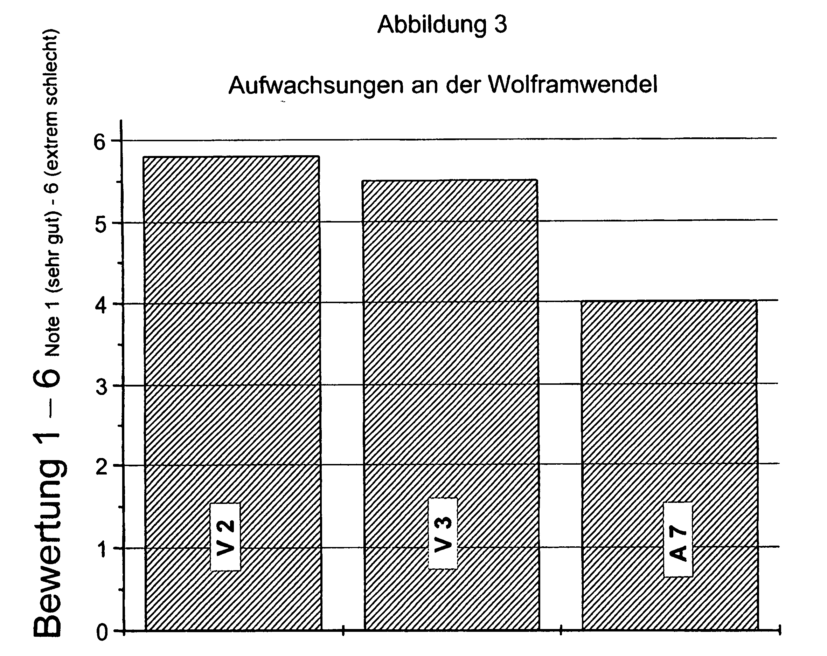

Abbildung 3 zeigt eine Bewertung der pathologischen Aufwachsungen am Wolfram-Gewickel für Lampen mit Kolben aus Gläsern der Beispiele A7 und V2 und V3. Die Tests wurden am Lampentyp H7 unter Applikationsbedingungen im Scheinwerfer durchgeführt. Die Brenndauer betrug ca. 1000 h.

Bewertet wurden anhand eines visuellen Bewertungssystems von 1 (= sehr gut = keine Aufwachsungen) bis 6 (= extrem schlecht = so starke Aufwachsungen, dass die Wendelwicklungen durch sie kurz geschlossen wurden).
Die Ergebnisse zeigen, dass bei dem erfindungsgemäßen Glas mit seiner CeO₂-und TiO₂-Dotierung deutlich weniger Aufwachsungen an der Wolfram-Glühwendel zu beobachten sind. Dadurch wird die Lebensdauer der Lampen deutlich erhöht.

Das Ergebnis für V3 zeigt, das eine Verringerung des Fe₂O₃-Gehalts bereits eine leichte Reduktion der Aufwachsungen bewirkt. Ein weiteres Reduzieren durch weiteres Reduzieren des Fe₂O₃-Gehalts wäre nur noch bedingt und durch Verwendung extrem eisenarmer Rohstoffe möglich, was die Produktion der Gläser enorm verteuern würde. Mit dem erfindungsgemäßen Glas wurde also ein Glas gefunden, das die gewünschten Verbesserungen hinsichtlich Verringerung der Aufwachsungen auf der Wendel und Erhöhung der Lebensdauer der Lampe ermöglicht, und dies ohne besondere Anforderungen an die Reinheit der verwendeten Rohstoffe, also ein Lampenglas, das größere Mengen an Fe₂O₃-Verunreinigungen toleriert und dessen Herstellung dadurch preiswerter ist.

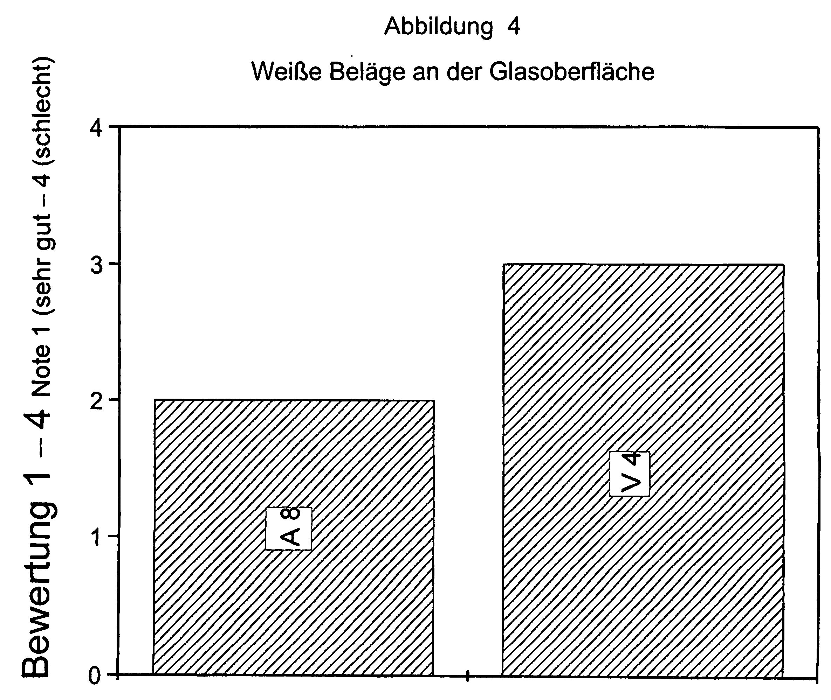

Abbildung 4 zeigt eine Bewertung der Bildung weißer Niederschläge für die Gläser der Beispiele A8 und V4 im Kontakt mit dem Füllgas von Halogenlampen. Die Tests wurden folgendermaßen durchgeführt:
Glasrohrabschnitte wurden zu Ampullen eingeschmolzen. Die Ampullen wurden mit 1000 ppm Cl₂BrCH und mit ca. 2,5 bar Xenon gefüllt. Anschließend wurden sie 92 h bei 700 °C im Ofen belassen.

Bewertet wurde anhand eines visuellen Bewertungssystems von 1 (= sehr gut = keine Beläge) bis 4 (= schlecht = starke Beläge).
Die Ergebnisse zeigen, dass bei dem erfindungsgemäßen Glas mit seiner CeO₂-und TiO₂-Dotierung deutlich weniger weiße Beläge zu beobachten sind. Dadurch wird im Lampenbetrieb die Lichtausbeute verbessert.

Das erfindungsgemäße Glas stellt also ein Glas mit einstellbarer UV-Kante, mit hoher Transmission im VIS- und im IR-Bereich, mit einem an das Ausdehnungsverhalten von Molybdän angepassten thermischen Ausdehnungskoeffizienten dar, das für die Verwendung als Halogenlampenkolbenglas gut geeignet ist, insbesondere, da Halogenlampen mit Kolben aus diesem Glas weniger anfällig für Niederschläge auf der Kolbeninnenseite und für Aufwachsungen auf der Wolfram-Wendel sind.

## Patentansprüche

1. Erdalkalialuminosilicatglas mit einer Zusammensetzung (in Gew.-% auf Oxidbasis) von
| | |
|---|---|
| SiO₂ | > 58 - 62 |
| B₂O₃ | 0 - 5,5 |
| Al₂O₃ | 13,5 - 17,5 |
| MgO | 0 - 7 |
| CaO | 5,5 - 14 |
| SrO | 0-8 |
| BaO | 6 - 14 |
| ZrO₂ | 0-2 |
| CeO₂ | 0,001 - 0,5 |
| TiO₂ | 0,01 - 2 |

2. Erdalkalialuminosilicatglas nach Anspruch 1,
**gekennzeichnet durch**
eine Zusammensetzung (in Gew.-% auf Oxidbasis) von
| | |
|---|---|
| SiO₂ | 59 - 62 |
| B₂O₃ | 3 - 5,5 |
| Al₂O₃ | 13,5 - 15,5 |
| MgO | 2,5 - 5 |
| CaO | 8,2-10,5 |
| BaO | 8,5 - 9,5 |
| ZrO₂ | 0 - 1 |
| CeO₂ | 0,001 - 0,2 |
| TiO₂ | 0,01 - 2 |

3. Erdalkalialuminosilicatglas nach Anspruch 1,
**gekennzeichnet durch**
eine Zusammensetzung (in Gew.-% auf Oxidbasis) von
| | |
|---|---|
| SiO₂ | > 58 - 62 |
| B₂O₃ | 0 - 1 |
| Al₂O₃ | 14 - 17,5 |
| MgO | 0 - 6 |
| CaO | 5,5 - 14 |
| SrO | 0-8 |
| BaO | 6-14 |
| ZrO₂ | 0 - 1 |
| CeO₂ | 0,001 - 0,2 |
| TiO₂ | 0,01 - 2 |

4. Erdalkalialuminosilicatglas nach Anspruch 1 oder 3,
**gekennzeichnet durch**
eine Zusammensetzung (in Gew.-% auf Oxidbasis) von
| | |
|---|---|
| SiO₂ | > 58 - 62 |
| B₂O₃ | 0,2 - 0,7 |
| Al₂O₃ | 15 - 17,5 |
| MgO | 0 - < 1 |
| CaO | 5,5 - 14 |
| SrO | 0 - 8 |
| BaO | 6 - 10 |
| ZrO₂ | 0,05 - 1 |
| CeO₂ | 0,001 - 0,2 |
| TiO₂ | 0,01 - 2 |

5. Erdalkalialuminosilicatglas nach wenigstens einem der Ansprüche 1 bis 4, **dadurch gekennzeichnet, daß** der CeO₂-Gehalt zwischen 0,01 Gew.-% und 0,2 Gew.-%, bevorzugt zwischen 0,01 Gew.-% und 0,1 Gew.-% beträgt.

6. Erdalkalialuminosilicatglas nach wenigstens einem der Ansprüche 1 bis 5,
**dadurch gekennzeichnet, daß** der
TiO₂-Gehalt zwischen 0,01 und 1 Gew.-%,
bevorzugt zwischen 0,03 Gew.-% und 0,8 Gew.-%,
besonders bevorzugt zwischen 0,1 Gew.-% und 0,8 Gew.-% beträgt.

7. Erdalkalialuminosilicatglas nach wenigstens einem der Ansprüche 1 bis 6,
**dadurch gekennzeichnet,**
**daß** es bis auf unvermeidbare Verunreinigungen frei ist von Eisenoxiden.

8. Erdalkalialuminosilicatglas nach wenigstens einem der Ansprüche 1 bis 7 mit einem spektralen Transmissionsgrad zwischen λ = 500 nm und λ = 1500 nm von ≥ 0,9 mm bei 1,0 mm Probendicke.

9. Verwendung eines Glases nach wenigstens einem der Ansprüche 1 bis 8 als Kolbenmaterial für Halogenlampenkolben.

## Claims

1. Alkaline-earth aluminosilicate glass with a composition (in % by weight, based on oxide) of
| | |
|---|---|
| SiO₂ | >58-62 |
| B₂O₃ | 0-5.5 |
| Al₂O₃ | 13.5-17.5 |
| MgO | 0-7 |
| CaO | 5.5-14 |
| SrO | 0-8 |
| BaO | 6-14 |
| ZrO₂ | 0-2 |
| CeO₂ | 0.001-0.5 |
| TiO₂ | 0.01-2 |

2. Alkaline-earth aluminosilicate glass according to Claim 1,
**characterized by**
a composition (in % by weight, based on oxide) of
| | |
|---|---|
| SiO₂ | 59-62 |
| B₂O₃ | 3-5.5 |
| Al₂O₃ | 13.5-15.5 |
| MgO | 2.5-5 |
| CaO | 8.2-10.5 |
| BaO | 8.5-9.5 |
| ZrO₂ | 0-1 |
| CeO₂ | 0.001-0.2 |
| TiO₂ | 0.01-2 |

3. Alkaline-earth aluminosilicate glass according to Claim 1,
**characterized by**
a composition (in % by weight, based on oxide) of
| | |
|---|---|
| SiO₂ | >58-62 |
| B₂O₃ | 0-1 |
| Al₂O₃ | 14-17.5 |
| MgO | 0-6 |
| CaO | 5.5-14 |
| SrO | 0-8 |
| BaO | 6-14 |
| ZrO₂ | 0-1 |
| CeO₂ | 0.001-0.2 |
| TiO₂ | 0.01-2 |

4. Alkaline-earth aluminosilicate glass according to Claim 1 or 3,
**characterized by**
a composition (in % by weight, based on oxide) of
| | |
|---|---|
| SiO₂ | >58-62 |
| B₂O₃ | 0.2-0.7 |
| Al₂O₃ | 15-17.5 |
| MgO | 0-<1 |
| CaO | 5.5-14 |
| SrO | 0-8 |
| BaO | 6-10 |
| ZrO₂ | 0.05-1 |
| CeO₂ | 0.001-0.2 |
| TiO₂ | 0.01-2 |

5. Alkaline-earth aluminosilicate glass according to at least one of Claims 1 to 4, **characterized in that** the CeO₂ content is between 0.01% by weight and 0.2% by weight, preferably between 0.01% by weight and 0.1% by weight.

6. Alkaline-earth aluminosilicate glass according to at least one of Claims 1 to 5, **characterized in that** the TiO₂ content is between 0.01 and 1% by weight, preferably between 0.03% by weight and 0.8% by weight, particularly preferably between 0.1% by weight and 0.8% by weight.

7. Alkaline-earth aluminosilicate glass according to at least one of Claims 1 to 6, **characterized in that** apart from inevitable impurities it is free of iron oxides.

8. Alkaline-earth aluminosilicate glass according to at least one of Claims 1 to 7, having a spectral transmittance between λ = 500 nm and λ = 1500 nm of ≥ 0.9 mm for a specimen thickness of 1.0 mm.

9. Use of the glass according to at least one of Claims 1 to 8 as bulb material for halogen lamp bulbs.

## Revendications

1. Verre d'aluminosilicate de métal alcalino-terreux présentant une composition (en % en poids sur base d'oxydes) de
| | |
|---|---|
| SiO₂ | > 58 à 62 |
| B₂O₃ | 0 à 5, 5 |
| Al₂O₃ | 13,5 à 17,5 |
| MgO | 0 à 7 |
| CaO | 5, 5 à 14 |
| SrO | 0 à 8 |
| BaO | 6 à 14 |
| ZrO₂ | 0 à 2 |
| CeO₂ | 0,001 à 0,5 |
| TiO₂ | 0, 01 à 2. |

2. Verre d'aluminosilicate de métal alcalino-terreux selon la revendication 1, **caractérisé par** une composition (en % en poids sur base d'oxydes) de
| | |
|---|---|
| SiO₂ | 59 à 62 |
| B₂O₃ | 3 à 5, 5 |
| Al₂O₃ | 13,5 à 15,5 |
| MgO | 2,5 à 5 |
| CaO | 8,2 à 10,5 |
| BaO | 8,5 à 9, 5 |
| ZrO₂ | 0 à 1 |
| CeO₂ | 0, 001 à 0, 2 |
| TiO₂ | 0,01 à 2. |

3. Verre d'aluminosilicate de métal alcalino-terreux selon la revendication 1, **caractérisé par** une composition (en % en poids sur base d'oxydes) de
| | |
|---|---|
| SiO₂ | > 58 à 62 |
| B₂O₃ | 0 à 1 |
| Al₂O₃ | 14 à 17,5 |
| MgO | 0 à 6 |
| CaO | 5,5 à 14 |
| SrO | 0 à 8 |
| BaO | 6 à 14 |
| ZrO₂ | 0 à 1 |
| CeO₂ | 0,001 à 0,2 |
| TiO₂ | 0,01 à 2. |

4. Verre d'aluminosilicate de métal alcalino-terreux selon la revendication 1 ou 3, **caractérisé par** une composition (en % en poids sur base d'oxydes) de
| | |
|---|---|
| SiO₂ | > 58 à 62 |
| B₂O₃ | 0 , 2 à 0, 7 |
| Al₂O₃ | 15 à 17 , 5 |
| MgO | 0 à <1 |
| CaO | 5,5 à 14 |
| SrO | 0 à 8 |
| BaO | 6 à 10 |
| ZrO₂ | 0,05 à 1 |
| CeO₂ | 0,001 à 0,2 |
| TiO₂ | 0,01 à 2. |

5. Verre d'aluminosilicate de métal alcalino-terreux selon au moins l'une quelconque des revendications 1 à 4, **caractérisé en ce que** la teneur en CeO₂ est comprise entre 0,01% en poids et 0,2% en poids, de préférence entre 0,01% en poids et 0,1% en poids.

6. Verre d'aluminosilicate de métal alcalino-terreux selon au moins l'une quelconque des revendications 1 à 5, **caractérisé en ce que** la teneur en TiO₂ est comprise entre 0,01% en poids et 1% en poids, de préférence entre 0,03% en poids et 0,8% en poids, de manière particulièrement préférée entre 0,1% en poids et 0,8% en poids.

7. Verre d'aluminosilicate de métal alcalino-terreux selon au moins l'une quelconque des revendications 1 à 6, **caractérisé en ce qu'**il est exempt, à d'inévitables impuretés près, d'oxydes de fer.

8. Verre d'aluminosilicate de métal alcalino-terreux selon au moins l'une quelconque des revendications 1 à 7, présentant un degré de transmission spectrale entre λ = 500 nm et λ = 1500 nm de ≥ 0,9 mm à une épaisseur d'échantillon de 1,0 mm.

9. Utilisation d'un verre selon au moins l'une quelconque des revendications 1 à 8 comme matériau pour les globes de lampes à halogène.
